Europäisches Patentamt

European Patent Office

Office européen des brevets

(11) Veröffentlichungsnummer: **0 139 942**
A2

(12) # EUROPÄISCHE PATENTANMELDUNG

(21) Anmeldenummer: **84109581.3**

(22) Anmeldetag: **11.08.84**

(51) Int. Cl.⁴: **B 65 D 88/64**
**B 65 G 65/36**

(30) Priorität: **07.09.83 DE 3332226**

(43) Veröffentlichungstag der Anmeldung:
**08.05.85 Patentblatt 85/19**

(84) Benannte Vertragsstaaten:
**AT BE CH DE FR GB IT LI LU NL SE**

(71) Anmelder: **Heidelberger Zement AG**
**Berliner Strasse 6**
**D-6900 Heidelberg(DE)**

(72) Erfinder: **Toepel, Fritz, Dipl.-Ing.**
**Berliner Strasse 6**
**D-6900 Heidelberg(DE)**

(74) Vertreter: **Ratzel, Gerhard, Dr.**
**Seckenheimer Strasse 36a**
**D-6800 Mannheim 1(DE)**

(54) **Verfahren und Vorrichtung zum erschütterungsfreien Entleeren eines mit Schüttgut gefüllten Behälters, insbesondere Silos oder Bunkers.**

(57) Die Erfindung betrifft ein Verfahren zur erschütterungsfreien Entleeren eines mit Schüttgut gefüllten Behälters, insbesondere Silos oder Bunkers, insbesondere eines mit Zementklinker gefüllten Großraumsilos mit mindestens einer Entnahmestelle, das dadurch gekennzeichnet ist, daß im Bereich oberhalb der Entnahmestelle der Materialdruck geringer gehalten wird als in den übrigen Bereichen, wobei nach einer bevorzugten Ausführungsform im Bereich der Entnahmestelle der Materialdruck unter einem bestimmten Höchstwert gehalten wird.

Die Erfindung betrifft ferner eine Vorrichtung zur Durchführung dieses Verfahrens, das dadurch gekennzeichnet ist, daß mindestens über einem Teil der Entleerungsöffnungen jeweils ein Rohr angeordnet ist, wobei vorzugsweise über einer zentralen Entleerungsöffnung ein Zentralrohr angeordnet ist.

./...

Fig.1

0139942

Verfahren und Vorrichtung zum erschütterungsfreien Entleeren
eines mit Schüttgut gefüllten Behälters, insbesondere Silos oder Bunkers

Die Erfindung betrifft ein Verfahren zum erschütterungsfreien Entleeren eines mit Schüttgut gefüllten Behälters, insbesondere Silos oder Bunkers, insbesondere eines mit Zementklinker gefüllten Großraumsilos, mit mindestens einer Entnahmestelle.

Desweiteren betrifft die Erfindung eine Vorrichtung zur Durchführung des oben genannten Verfahrens, vorzugsweise ein zylindrisches Silo mit einer zentralen Entleerungsöffnung.

Ein Problem bei beispielsweise mit Zementklinker gefüllten größeren Silos und Großraumsilos und auch Stückkohlensilos (Rohkohlesilos) besteht darin, daß deren Entleerungsprozeß im Siloinneren nicht vollkommen kontinuierlich erfolgt. Vielmehr beobachtet man Schläge, die deutlich hörbar und als Bodenerschütterungen übrige Betriebsteile und auch ferner liegende Anwohner erheblich stören können. So können diese Störungen je nach Bodenbeschaffenheit in einer Entfernung von bis zu ca. einem Kilometer zu Beschwerden der Betroffenen führen. Bei solchen großen Silos ist beispielsweise an solche zu denken, die eine Höhe von mehr als 20 m aufweisen. Diese Silos sind meist zylindrisch in ihrer Grundform. Der üblicherweise in den Silos zu lagernde Zementklinker ist ein körniges Gut aus im einzelnen zwar angeschmolzenen, jedoch zackigen und harten, abriebfesten Körnern von einer Korngröße von 0,1 bis 30 mm. Auch gröbere Körner über ca. 3 cm und ein größerer Anteil an Feinmaterial gehört hierzu. Das Schüttgewicht von solchem Klinker beträgt ca. 1,5 Tonnen/ m³. Die Ursache der beobachteten Erschütterungen, als Folge der Schläge im Silo ist nicht mit Sicherheit bekannt. Als Ursache vermutet man die Existenz von dichten und lockeren Schüttgutbereichen und Zonen, die sich beim Fließen bezüglich ihrer Dichte und Lage zueinander ständig verändern. Die lockeren Schüttgutbereiche bzw. Zonen spielen dabei die Rolle von Quasi-Hohlräumen, die bei entsprechender Größe nicht mehr in der Lage sind, den Materialdruck der darüberliegenden dichteren Materialbereiche zu tragen. Dementsprechend spielen die dichteren Materialbereiche dann die Rolle von Quasi-Brücken, die, die dichtere Bereiche des Schüttguts über lockeren Bereichen abstützen. Die unter solchen Quasi-Brücken gelegenen lockeren Bereiche spielen die Rolle von Quasi-Hohlräumen. Man vermutet, daß sich in dem Schüttgut somit von dem Schüttgut selbst überbrückte Quasi-Hohlräume bilden können, die nach Erreichen einer kritischen Größe zusammenbrechen. Beim Abziehen des Schüttguts dürfte dies unvermeidlich sein, da sich die Schüttdichte des Materials und damit auch dessen Druck gegenüber den Werten im Ruhezustand verringert. Erst in einem solchen, entspannten Zustand fließt das Material.

Der Erfindung liegt die Aufgabe zugrunde, ein solches Silo hingegen erschütterungsfrei entleeren zu können.

Diese Aufgabe wird gemäß den Verfahren der vorliegenden Erfindung dadurch gelöst, daß im Bereich oberhalb der Entnahmestelle der Materialdruck des Schüttgutes geringer gehalten wird als in den übrigen Bereichen.

Insbesondere wird dazu im Bereich oberhalb der Entnahmestelle der Materialdruck unter einem bestimmten Höchstwert gehalten.

Die Erfindung betrifft ferner eine Vorrichtung zur Durchführung des erfindungsgemäßen Verfahrens, die dadurch gekennzeichnet ist, daß mindestens über einem Teil der Entleerungsöffnungen jeweils ein Rohr angeordnet ist. Dieses Rohr bzw. diese Rohre kann (können) beliebigen Querschnitt aufweisen, vorzugsweise einen kreisrunden Querschnitt.

- 3 -

Es wurde ferner gefunden, daß im Falle eines zylindrischen Silos mit einer zentralen Entleerungsöffnung
es ausreicht, über der Entleerungsöffnung ein Zentralrohr
anzuordnen. Dabei macht man sich die Annahme zunutze,
daß der Bereich, in dem das Schüttgut abfließt, im
wesentlichen lotrecht über der Entleerungsöffnung zu
suchen ist. Dieser Bereich wird somit von dem Zentralrohr in gewünschter Weise beeinflußt.

Bevorzugt wird, daß das Zentralrohr in seiner Wand
Öffnungen aufweist, die sowohl als Einlauföffnungen als
auch als Auslauföffnungen fungieren können. Dabei
werden die Öffnungen insbesondere über die gesamte
Länge des Zentralrohres verteilt, wobei sich das Zentralrohr selbst ohnehin im wesentlichen über die gesamte Höhe des Innenraumes des Silos erstreckt. Es kann
allerdings dabei zugelassen werden, daß das Zentralrohr ein bestimmtes Stück unterhalb der Decke des Silos
endet, sofern dadurch oberhalb des Zentralrohres nicht
mehr genug Raum verbleibt, daß hier ein Bereich innerhalb des Schüttguts entstehen könnte, in dem das Schüttgut abfließt, jedoch einen Vertikaldruck besitzt, der
über dem zulässigen Höchstwert liegt. Für die Wirkungsweise eines solchen Zentralrohres mit Ein- und/oder Auslauföffnungen sollte man annehmen, daß über der gesamten Länge des Zentralrohres durch die verschiedenen
Öffnungen Schüttgut aus dem übrigen Silo auch in das
Zentralrohr hineinfließt oder auch möglicherweise aus
demselben in das übrige Silo zurückfließt. Entgegen aller
Erwartung findet dies jedoch nicht statt. Stattdessen
bewegt sich das Schüttgut innerhalb des Zentralrohres
in einem nahezu idealen Kolbenfluß zur Entleerungsöffnung.
Da nun innerhalb des Zentralrohres das Schüttgut im Kolbenfluß abfließt, wird aus dem übrigen Silo immer nur im
wesentlichen oberhalb der obersten Schüttgutfläche in
dem Zentralrohr weiteres Schüttgut nachfließen.

Dieser Schüttgut-Nachfluß aus dem übrigen Silo findet dabei im wesentlichen an der Schüttgutoberfläche in dem übrigen Silo statt, wo stets ebenfalls mit einem unterkritischen Vertikaldruck gerechnet werden kann. Solchermaßen wird das Silo in nahezu idealer Weise erschütterungsfrei entleert.

Dabei ist es nicht notwendig, möglichst viele Öffnungen über der Länge des Zentralrohres vorzusehen. Es reicht aus, daß der Abstand der Öffnungen über der Länge des Zentralrohres einen bestimmten Wert nicht überschreitet. Dieser Wert wird zum einen dadurch gegeben, daß in dem übrigen Silo durch Vertikaldruck des Schüttguts den kritischen Wert nicht erreicht. Denn es kann sich innerhalb des übrigen Silos immer nur höchstens eine solche Schüttguthöhe von abzuführendem Schüttgut ausbilden, wie dem Abstand zwischen den einzelnen Öffnungen über der Länge des Zentralrohres entspricht. Dies liegt eben darin begründet, daß immer nur durch solche Öffnungen,die oberhalb des obersten Schüttgutspiegels in dem Zentralrohr liegen,Schüttgut aus dem übrigen Silo in das Zentralrohr zufließt. Der Durchmesser bzw. Querschnitt des Zentralrohres kann wiederum möglichst klein gewählt werden. Auch hier ist eine untere Grenze durch die statische Belastungsgrenze des Zentralrohres gegeben.

Zum möglichst verschleißfreien Fördern des Schüttgutes im Kolbenfluß innerhalb des Zentralrohres ist dieses bevorzugterweise innen mit einer Verschleißschutzschicht z.B. mit Schmelzbasalt und/oder Stauringen zur Erzeugung einer Ruhezone des Schüttgutes an der Innenwand des Zentralrohres ausgerüstet.

Die Stauringe verlaufen dabei quer zur Fließrichtung an der Innenwand des Zentralrohres und behindern somit die Bewegung des Schüttgutes unmittelbar an der Innenwandung des Zentralrohres. Die so gebildete Ruhezone des Schüttguts an der Innenwandung des Zentralrohres stellt damit eine Verschleißschutzschicht für die Innenwandung des Zentralrohres gegenüber dem fließenden Schüttgut dar. Dies gilt insbesondere in dem zu dieser Erfindung speziell angesprochenen Fall von Zementklinker.

Ist das Zentralrohr oben, unterhalb der Decke des Silos, offen, so kann das Silo durch das Zentralrohr hindurch befüllt werden. Die Öffnungen in dem Zentralrohr dienen dabei als Füllöffnungen für die verschiedenen Höhenbereiche des Silos. Dabei findet ein zu dem erfindungsgemäßen Entleeren des Silos umgekehrter Befüllungsvorgang statt. Man kann jedoch auch unter eine Einfüllöffnung in der Decke des Silos auf dem Zentralrohr einen Verteilerkegel oder eine Verteilerplatte anordnen. Dann gleitet das einzufüllende Schüttgut von dem Verteilerkegel oder einem sich auf der Verteilerplatte bildenden Schüttkegel ab und fällt somit direkt in das Silo außerhalb des Zentralrohres. Oder man ordnet oben unter der Einfüllöffnung in dem Zentralrohr einen Verteilerkegel oder eine Verteilerplatte an und sieht auf der Höhe des Verteilerkegels bzw. der Verteilerplatte in der Wandung des Zentralrohres geeignete Verteileröffnungen für das Schüttgut vor. Auch in diesem Fall fällt das Schüttgut oben von dem Verteilerkegel bzw. von einem sich auf der Verteilerplatte bildenden Schüttkegel in die übrigen Silobereiche außerhalb des Zentralrohres herab.

- 6 -

Falls das Schüttgut durch mindestens eine weitere dezentrale Entleerungsöffnung abgezogen werden soll, kann mindestens ein weiteres dezentrales Rohr über dieser Entleerungsöffnung angebracht sein, um das Schüttgut in gleicherweise erschütterungsfrei abziehen zu können. Es gilt hier das Analoge zum Zentralrohr.

All das, was vorstehend zum "Zentralrohr" und dessen erfindungsgewollter Wirkung ausgeführt ist, gilt schlechthin für das Rohr gemäß Anspruch 3.

Eine Ausführungsform zu der Erfindung sei anhand der Figuren erläutert. Es zeigen:

Figur 1    den Längs-Querschnitt durch ein zylindrisches Silo mit Zentralrohr,

Figur 2    einen Längs-Querschnitt entsprechend Figur 1 jedoch eines Silos mit flachem Boden,

Figur 3    einen Längs-Querschnitt entsprechend Figur 1 jedoch mit einer Verteilerplatte im Zentralrohr,

Figur 4    den Querschnitt entlang der Schnittlinie A-B in den Figuren 1 bis 3,

Figur 5    Längs-Querschnitte eines Ausschnittes durch
und    6    das Zentralrohr.

Das dargestellte Beispiel orientiert sich an einem Silo von der Höhe von 40 m aus Beton mit einem Innendurchmesser von 16 m.

Der Innendurchmesser des Zentralrohres beträgt 2 m, ist also im Verhältnis zum Innendurchmesser des Silos möglichst klein gewählt. Die Silowand 6 ist, wie gesagt, zylindrisch. Der Siloboden 7 ist trichterförmig in an sich bekannnter Weise ausgebildet. Die Trichterspitze des Silobodens 7 weist eine zentrale Entleerungsöffnung 9 auf. Über ihr ist das Zentralrohr 4 angeordnet, das sich bis unter die Decke 12 des Silos erstreckt. In gleichmäßigen Abständen von ca. 3,50 m sind in der Wandung des Zentralrohres 4 Öffnungen 5 vorgesehen. Unterhalb der Einfüllöffnung 1 in der Decke 12 ist in dem Zentralrohr 4 ein Verteilerkegel 2 vorgesehen. Um ihn herum sind in dem Zentralrohr 4 Verteileröffnungen 3 angeordnet, durch die das durch die Einfüllöffnung 1 einzufüllende Schüttgut in das übrige Silo herabrieseln kann. Mit dem Bezugszeichen 8 ist die unterste Öffnung im Zentralrohr und mit dem Bezugszeichen 11 eine Abstützung bezeichnet.Bevorzugt ist , daß das Zentralrohr 4 normalzylindrisch bis zu dem Siloboden 7 reicht.

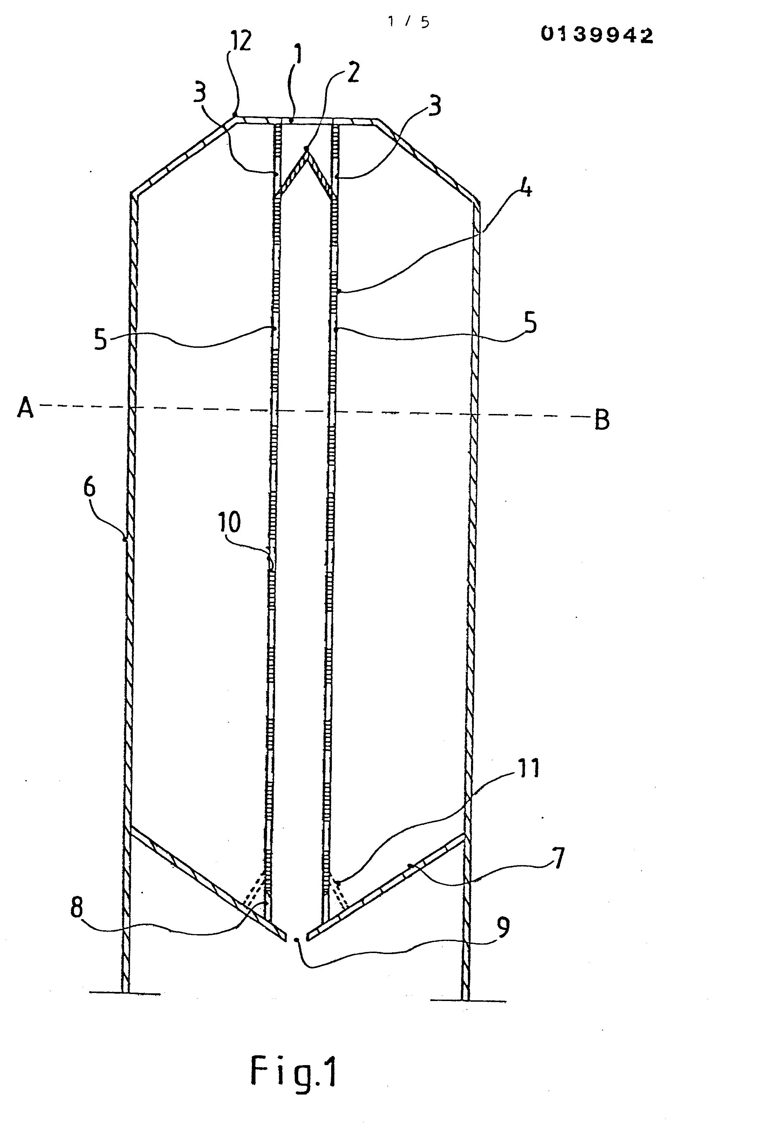

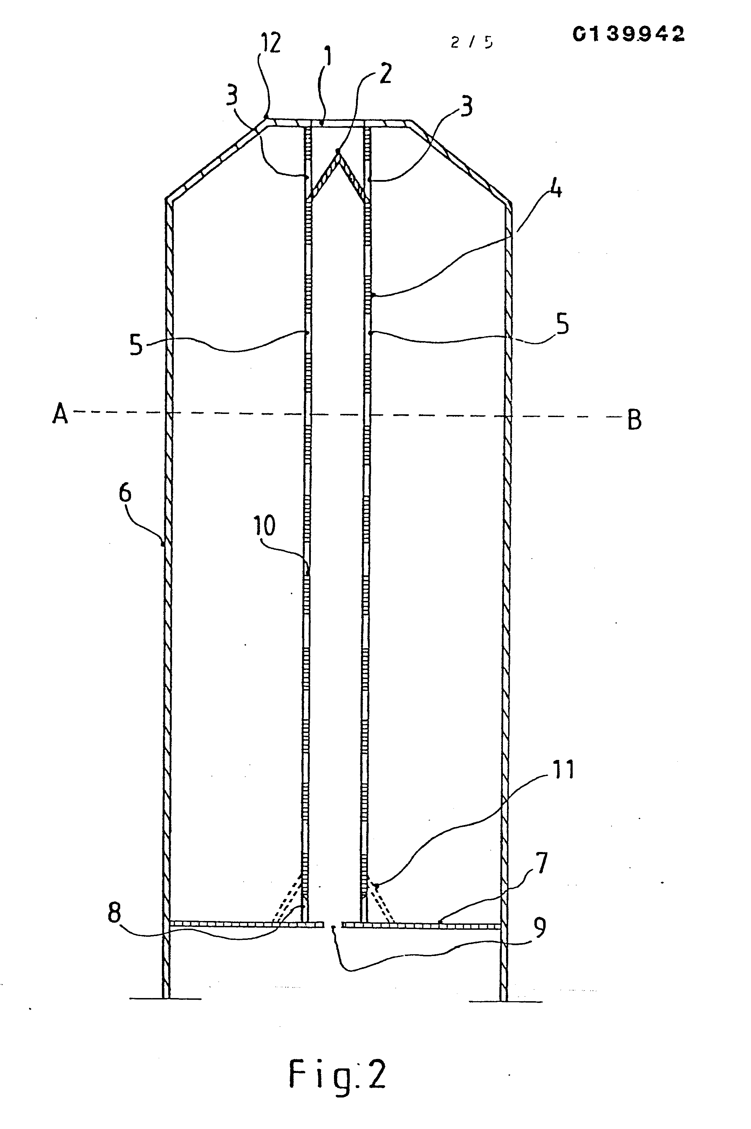

In Figur 2 ist ein Silo entsprechend zu Figur 1 dargestellt. Dieses Silo besitzt jedoch einen üblichen ebenen, also flachen Siloboden 7. Ansonsten kann auf die Erläuterungen zu Figur 1 verwiesen werden.

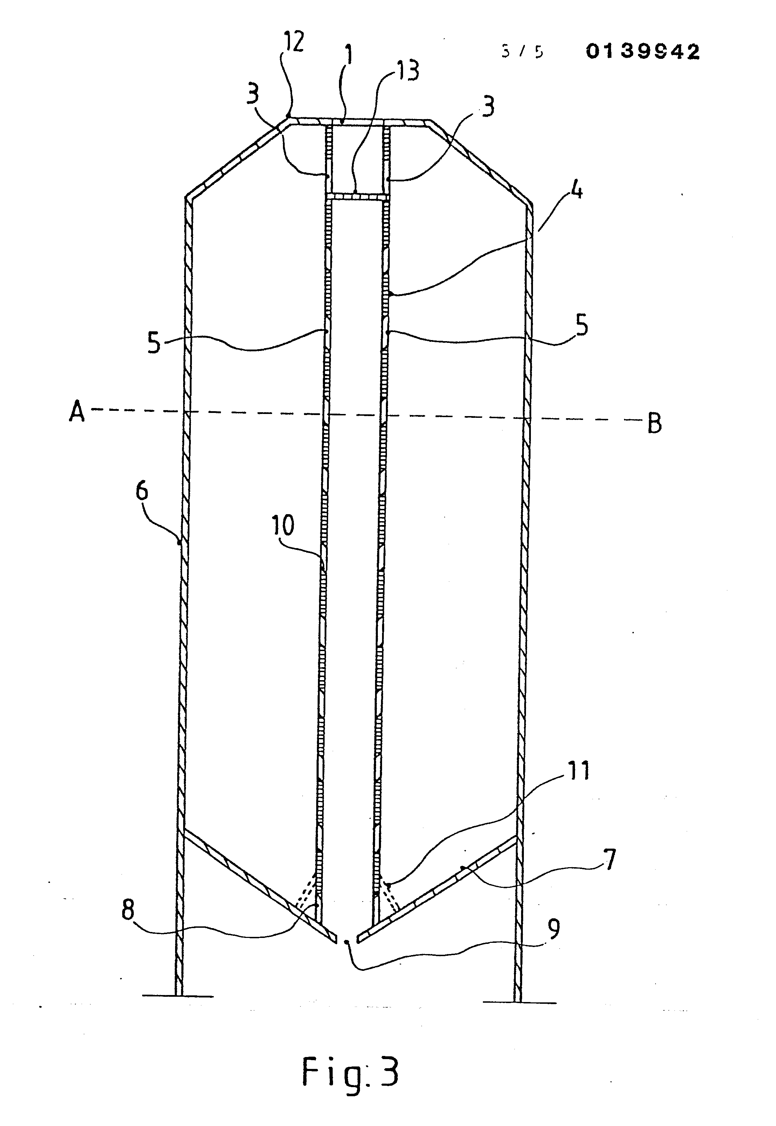

In Figur 3 ist ein Silo entsprechend Figur 1 dargestellt. In diesem Silo ist jedoch in dem Zentralrohr 4 anstelle eines Verteilerkegels eine Verteilerplatte 13 vorgesehen. Auch diese Verteilerplatte 13 liegt unterhalb der Einfüllöffnung 1 in der Decke 12. Um diese Verteilerplatte herum sind in dem Zentralrohr 4 Verteileröffnungen 3 angeordnet, durch die das durch die Einfüllöffnung 1 einzufüllende Schüttgut in das übrige Silo herabrieseln kann.

Diese Verteilerplatte ist gegenüber einem Verteilerkegel verschleißfester, da sich auf der Verteilerplatte ein Schüttkegel aus dem Schüttgut bildet, der somit die Verteilerplatte selbst gegen das rieselnde Schüttgut abschirmt. In der Verteilerplatte kann eine verschließbare Einstiegöffnung zum Begehen oder Befahren des Zentralrohres vorgesehen sein.

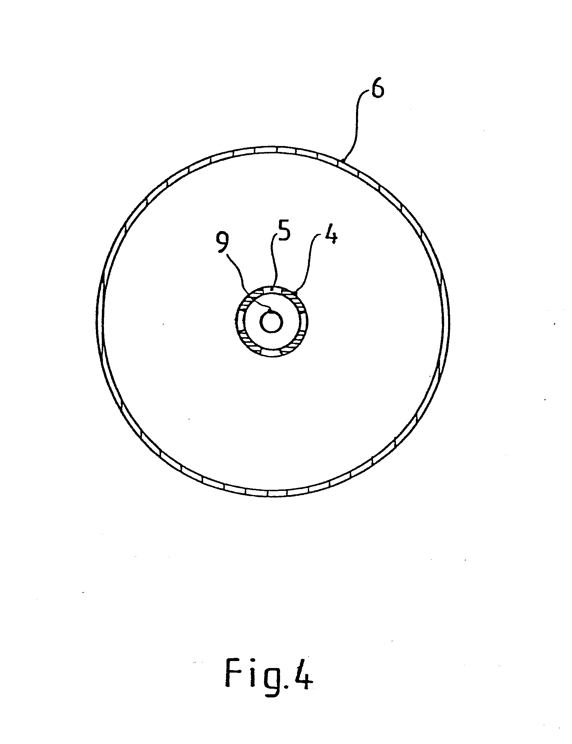

In Figur 4 ist der Querschnitt entlang der Schnittlinie A-B aus Figur 1 dargestellt. Die Bezugsziffern entsprechen denen aus Figur 1, so daß diesbezüglich auf Erläuterungen verzichtet werden kann. Sichtbar wird in dieser Figur, daß jeweils vier Einlauföffnungen 5 vorgesehen sind, zwischen denen Wandungsteile des Zentralrohres 4 von im wesentlichen entsprechender Weite belassen sind.

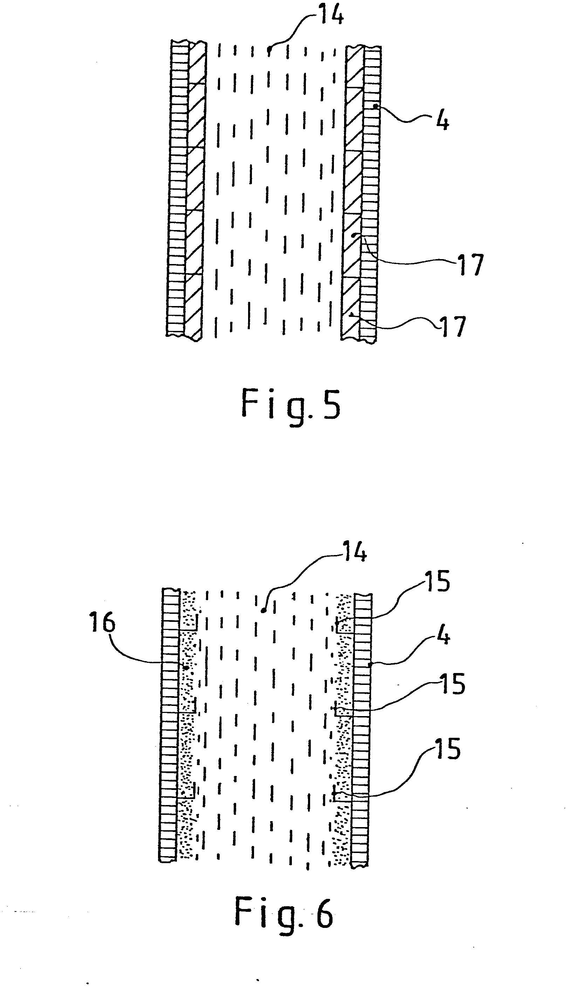

In Figur 5 ist ein Längsquerschnitt durch einen Ausschnitt des Zentralrohres 4 dargestellt. Auf der Innenseite des Zentralrohres 4 sind zur Erzeugung einer Verschleißschutzschicht die Schmelzbasaltauskleidung 17 angeordnet. Mit dem Bezugszeichen 14 ist der Fließkern des Schüttgutes bezeichnet.

In Figur 6 ist wiederum ein Längsquerschnitt durch einen Ausschnitt des Zentralrohres 4 dargestellt. Auf der Innenseite des Zentralrohres 4 sind zur Erzeugung einer Verschleißschutzschicht besondere Stauringe 15 vorgesehen, durch die das Schüttgut in eine Ruhezone und einen Fließkern 14 unterteilt wird. In dem Fließkern 14 bewegt sich das Schüttgut, während es in der Ruhezone an seiner Bewegung von den Stauringen 15 behindert wird. Die Ruhezone 16 stellt damit eine auf der Innenseite des Zentralrohres 4 befindliche Verschleißschutzschicht gegenüber dem Fließkern 14 dar. Weitere bevorzugte Ausführungsformen des Erfindungsgegenstandes sind in den Unteransprüchen niedergelegt.

Aus dem Vorstehenden ist verständlich, daß die erfindungsgemäße Lösung statisch ist, im Unterschied zu einer dynamischen Lösung, welche bewegte Teile wie z.B. im Falle eines Vibrators, verwendet. Das statische Mittel ist hier insbesondere durch das erfindungsgemäße Zentralrohr gegeben. Dies bedeutet, daß der erfindungsgemäße Lösung beim Betrieb keine Energie zugeführt werden muß; dementsprechend sparsam ist ihr Betrieb. Auch unterliegt die statische Lösung wesentlich weniger dem Verschleiß als die dynamische Lösung, wie z.B. ein Vibrator.Insbesondere im Falle des Zentralrohrs liegt außerdem eine nachrüstbare Vorrichtung vor, das heißt, daß schon bestehende Silos erfindungsgemäß nachgerüstet werden können. Außerdem belastet ein solches statisches Mittel bestehende Silos nicht zusätzlich, es entlastet sogar die Silowand beim Entleeren des Schüttguts , so daß unter Beibehaltung der gegebenen Silostatik die Nachrüstung vorgenommen werden kann, was bei der Verwendung von dynamischen Lösungen nicht selbstverständlich ist.

Es sei noch erwähnt, daß bei dem dargestellten Ausführungsbeispiel zu den angegebenen Maßen mit Öffnungen von jeweils einer Breite von 60 cm und einer Höhe von jeweils einem Meter zuverlässige Ergebnisse erzielt worden sind.

## Zeichenerklärung

| | |
|---|---|
| 1 | Einfüllöffnung |
| 2 | Verteilerkegel |
| 3 | Verteileröffnung |
| 4 | Zentralrohr |
| 5 | Einlauföffnung bzw. Auslauföffnung |
| 6 | Silowand |
| 7 | Siloboden |
| 8 | unterste Öffnung im Zentralrohr |
| 9 | Entleerungsöffnung |
| 10 | Einlaufrand |
| 11 | Abstützung |
| 12 | Decke |
| 13 | Verteilerplatte |
| 14 | Fließkern |
| 15 | Stauring |
| 16 | Ruhezone |
| 17 | Schmelzbasaltauskleidung |

- 1 -

A n s p r ü c h e

1. Verfahren zum erschütterungsfreien Entleeren
eines mit Schüttgut gefüllten Behälters, insbesondere Silos oder Bunkers, insbesondere eines
mit Zementklinker gefüllten Großraumsilos, mit
mindestens einer Entnahmestelle,
dadurch gekennzeichnet,
daß im Bereich oberhalb der Entnahmestelle der
Materialdruck geringer gehalten wird als in den
übrigen Bereichen.

2. Verfahren nach Anspruch 1,
dadurch gekennzeichnet,
daß im Bereich der Entnahmestelle der Materialdruck unter einem bestimmten Höchstwert gehalten
wird.

3. Vorrichtung zur Durchführung des Verfahrens
nach Anspruch 1 oder 2,
dadurch gekennzeichnet,
daß mindestens über einem Teil der Entleerungsöffnungen jeweils ein Rohr angeordnet ist.

4. Vorrichtung nach Anspruch 3 in einem zylindrischen
Silo mit einer zentralen Entleerungsöffnung,
dadurch gekennzeichnet,
daß über der zentralen Entleerungsöffnung (9) ein
Zentralrohr (4) angeordnet ist.

5. Vorrichtung nach Anspruch 3 oder 4,
dadurch gekennzeichnet,
daß das Rohr, insbesondere Zentralrohr, in seiner
Wand Öffnungen aufweist, die als Einlauföffnungen
und/oder als Auslauföffnungen für das Schüttgutmaterial fungieren.

6. Vorrichtung nach Anspruch 5,
   dadurch gekennzeichnet,
   daß die Öffnungen (5) über die gesamte Länge
   des Rohres, insbesondere Zentralrohres (4) verteilt sind.

7. Vorrichtung nach Anspruch 5 oder 6,
   dadurch gekennzeichnet,
   daß der Abstand der Öffnungen (5) über der Länge
   des Rohres, insbesondere Zentralrohres (4) einen
   bestimmten Wert nicht überschreitet.

8. Vorrichtung nach mindestens einem der Ansprüche
   3 bis 7,
   dadurch gekennzeichnet,
   daß das Rohr, insbesondere Zentralrohr (4) innen
   mit einer Verschleißschutzschicht, z.B. mit Schmelzbasalt und/oder Stauringen (15) zur Erzeugung einer
   Ruhezone des Schüttgutes an der Innenwand des Zentralrohres ausgerüstet ist.

9. Vorrichtung nach mindestens einem der Ansprüche
   3 bis 8,
   dadurch gekennzeichnet,
   daß das obere Ende des Rohres, insbesondere Zentralrohres (4) als Einfüllöffnung für das Schüttgut ausgebildet ist.

10. Vorrichtung nach mindestens einem der Ansprüche
    3 bis 9,
    dadurch gekennzeichnet,
    daß unter einer Einfüllöffnung (1) in der Decke (12)
    des Silos auf oder in dem Rohr, insbesondere Zentralrohr (4) mit Verteileröffnungen (3) gegebenenfalls in
    deren Höhe ein Verteilerkegel (2) oder eine Verteilerplatte (13) angeordnet ist.

11. Vorrichtung nach mindestens einem der Ansprüche 4 bis 10,

dadurch gekennzeichnet,

daß mindestens ein weiteres dezentrales Rohr entsprechend dem Zentralrohr vorgesehen ist, wobei gegebenenfalls jedem dezentralen Rohr ebenfalls eine eigene Auslauföffnung zugeordnet ist.

Fig.1

Fig:2

Fig. 3

Fig.4

14

4

17

17

## Fig. 5

14

15

16

4

15

15

## Fig. 6